**Europäisches Patentamt**

**European Patent Office**

**Office européen des brevets**

(19)

(11) Veröffentlichungsnummer: **0 025 781**
**A1**

(12) # EUROPÄISCHE PATENTANMELDUNG

(21) Anmeldenummer: **80890097.1**

(22) Anmeldetag: **04.09.80**

(51) Int. Cl.³: **A 47 L 15/42**

(30) Priorität: **12.09.79 AT 6019/79**

(43) Veröffentlichungstag der Anmeldung: **25.03.81**
**Patentblatt 81/12**

(84) Benannte Vertragsstaaten: **BE CH DE FR GB IT LI LU NL SE**

(71) Anmelder: **Sonnenschein, Christian, Josef**
**Kainzmayergasse 10, A-1228 Wien (AT)**

(72) Erfinder: **Sonnenschein, Christian, Josef**
**Kainzmayergasse 10, A-1228 Wien (AT)**

(74) Vertreter: **Piso, Eberhard, Dr., Gluckgasse 1,**
**A-1010 Wien (AT)**

(54) **Gläser- und Geschirrspülmaschine.**

(57) Gläser- und Geschirrspülmaschine mit einem Gehäuse (1), in welchem ein drehbarer, Gläser und Geschirr aufnehmender Korb über einer Laugenwanne (2) angeordnet ist, mit einem mit gegen den Korb gerichteten Öffnungen versehenen Waschrohr (11) und einem entsprechenden Schwemmrohr (14), mit einem Boiler (3) zum Erhitzen des Wasch- und Schwemmwassers mit Elektroventilen (7, 8, 9) für das Kalt- und Warmschwemmen sowie für den Wasserzulauf, mit einer Dosierpumpe (6) für den Glanzspüler, mit einer Laugenpumpe (5) und einem Abwasserabfluß, wobei in einem vom heißen Abwasser durchströmten Wärmetauscher (4) das zugeführte Kaltwasser erwärmt wird, derart, daß außer dem Abwasserwärmetauscher ein weiterer Wärmetauscher (15) mit Mischkammer für das Schwemmrohr (14) an den Boiler (13) und an die Dosierpumpe (6) für das Glanzspülmittel angeschlossen ist, daß alle Wände, der Boden, die Decke und die Tür des Gehäuses (1) doppelwandig ausgeführt und mit Isoliermaterial ausgefüllt sind, daß der Abwasserwärmetauscher (4), der Boiler (3) und die Laugenwanne (2) übereinander angeordnet sind, daß der Laugenwannenboden auf dem nach oben offenen Boiler aufsitzt und an diesem, z. B. durch Schweißen, befestigt ist und daß zwischen Gehäusewänden und den senkrechten Wänden von Laugenwanne (2), Boiler (3) und Abwasserwärmetauscher (4) zur Aufnahme von Isoliermaterial ein Abstand vorhanden ist.

35265

Gläser- und Geschirrspülmaschine

Die Erfindung betrifft eine Gläser- und Geschirrspülmaschine mit einem Gehäuse, in welchem ein drehbarer, Gläser und Geschirr aufnehmender Korb über einer Laugenwanne angeordnet ist, mit einem mit gegen den Korb gerichteten Öffnungen versehenen Waschrohr und einem entsprechenden Schwemmrohr, mit einem Boiler zum Erhitzen des Wasch- und Schwemmwassers, mit Elektroventilen für das Kalt- und Warmschwemmen sowie für den Wasserzulauf, mit einer Dosierpumpe für den Glanzspüler, mit einer Laugenpumpe und einem Abwasserabfluß, wobei in einem vom heißen Abwasser durchströmten Wärmetauscher das zugeführte Kaltwasser erwärmt wird.

Die bekannten Spülmaschinen dieser Art sind vor allem nicht wärmeisoliert und haben im allgemeinen auch keine Abwasserwärmeverwertung, sodaß sowohl die abstrahlende Wärme des Gerätes als auch die Wärme des Abwassers ungenützt bleibt. Außerdem ist der Leistungsaufwand bei den bekannten Gläser- und Geschirrspülmaschinen beträchtlich, da sowohl für die Erhitzung des Wasch- als auch des Schwemmwassers bestimmt dimensionierte Heizstäbe zur Verfügung stehen müssen.

Eine aus der DE-OS 2,730.489 bekannte Geschirrspülmaschine nützt zwar die überschüssige Wärme des aufgeheizten Spülwassers nach dem Spülvorgang dadurch aus, daß das in einen separaten Vorratsbehälter eingeführte Frischwasser durch eine wärmeleitende Verbindung und durch einen mehrere Minuten dauernden Temperaturausgleich erwärmt wird. Dabei gibt aber der an den Außenseiten der Maschine angeordnete Vorratsbehälter zugleich Wärme durch Abstrahlung nach außen ab, sodaß dadurch ein Teil der übertragenen Wärme wieder verloren geht.

Schließlich sind durch die DE-PS 1,153.780 und 712.150 sowie durch die DE-OS 2,454.100 und 2,510.927 Spül- bzw. Reinigungsvorrichtungen für Flaschen u.dgl. mit Wärmetauschern bekannt geworden, in welchen einem heißen Medium Wärme entzogen und einem kalten Medium zugeführt wird zu dem Zweck, Energie zu sparen. Diese bekannten Vorrichtungen haben allerdings den Nachteil, daß die übertragene Wärme durch Abstrahlung zum Teil wieder verloren geht, sodaß von einer vollständigen Ausnützung der in der Vorrichtung vorhandenen Wärme nicht gesprochen werden kann.

Aufgabe der Erfindung ist es, die eingangs erwähnte Gläser- und Geschirrspülmaschine so auszubilden, daß die Wärme des Abwassers möglichst vollständig ausgenutzt wird und die innerhalb des Gerätes entstehende Wärme nicht durch Abstrahlung verloren geht.

0025781

Gelöst wird diese Aufgabe erfindungsgemäß dadurch, daß außer dem Abwasserwärmetauscher ein weiterer Wärmetauscher mit Mischkammer für das Schwemmrohr an den Boiler und an die Dosierpumpe für das Glanzspülmittel angeschlossen ist, daß alle Wände, der Boden, die Decke und die Tür des Gehäuses doppelwandig ausgeführt und mit Isoliermaterial ausgefüllt sind, daß der Abwasserwärmetauscher, der Boiler und die Laugenwanne übereinander angeordnet sind, daß der Laugenwannenboden auf dem nach oben offenen Boiler aufsitzt und an diesem, z.B. durch Schweißen befestigt ist und daß zwischen Gehäusewänden und den senkrechten Wänden von Laugenwanne, Boiler und Abwasserwärmetauscher zur Aufnahme von Isoliermaterial ein Abstand vorhanden ist.

Der zusätzliche Wärmetauscher mit Mischkammer bewirkt einen gleichmäßigen Übergang bei der Benützung von heißem Schwemmwasser, das auf lauwarmes Waschwasser folgt bzw. umgekehrt bei der Benützung von kaltem Schwemmwasser, die auf die vorherige Verwendung von warmem Waschwasser erfolgt.

Mit der erfindungsgemäßen Ausbildung wird innerhalb der Maschine nicht nur eine kompakte Einheit aller jener Teile, die von heißem und warmem Wasser durchflossen sind, erreicht, sondern auch eine Abschirmung und Isolierung dieser Teile ermöglicht, sodaß eine Abstrahlung der Wärme nach außen fast völlig unterbunden wird.

Die Erfindung besteht auch darin, daß der Wärmetauscher mit Mischkammer aus einem Gehäuse mit drei Anschlüssen auf der einen Seite für Heiß- und Kaltwasser sowie für den Glanzspüler und einen Anschluß auf der anderen Seite für das Schwemmrohr aufweist und daß zwischen diesen vier Anschlüssen eine Trennwand mit Löchern vorgesehen ist, welche Wand die Mischkammer bildet. Durch diese Maßnahme wird das Wasser innerhalb des Wärmetauschers auf die Temperatur der Lauge gebracht. Bei Durchfließen des Schwemmwassers gleicht sich die Temperatur an die vorgesehene Schwemmtemperatur an, sodaß keine großen Temperatursprünge zwischen den einzelnen Kaltwasser- und Heißwasserschwemmvorgängen oder umgekehrt entstehen können.

Die Erfindung besteht auch darin, daß der Abwasserwärmetauscher aus im Abstand voneinander gehaltenen Kupferröhren und einem diese umgebenden Gehäuse mit Ein- und Auslass besteht, wobei Ein- und Auslaß für das Abwasser an den Kupferröhren diametral gegenüberliegend angeordnet sind und der Einlaß für das Abwasser näher dem Auslaß für das Frischwasser als der Auslaß für das Abwasser dem Einlaß für das Frischwasser ist. Mit dieser konstruktiven Ausbildung des Abwasserwärmetauschers wird der Wärmetausch im Gegenstrom erreicht, was eine besonders gute Ausnützung der Wärme des Abwassers gestattet.

Schließlich ist es erfindungsgemäß auch möglich, daß der Kaltwasseranschluß mit dem Kaltschwemmventil und der Heißwasseranschluß mit dem Abwasserwärmetauscher über den Boiler in Verbindung stehen, wobei an den Anschluß für den Glanzspüller die Dosierpumpe angeschlossen ist.

Die Erfindung ist in der Zeichnung an Hand eines Ausführungsbeispiels näher veranschaulicht.

Es zeigen Fig.1 eine schaubildliche schematische Darstellung der erfindungsgemäßen Gläser- und Geschirrspülmaschine mit abgebrochenem Gehäuse, Schaltventilen und der zugehörigen elektronischen Steuerung, Fig.2 einen nach einer Seite offenen Boiler im Schaubild, Fig.3 einen Wärmetauscher in Seitenansicht, Fig.4 in Draufsicht und Fig.5 in Vorderansicht, Fig.6 einen Wärmetauscher mit Mischkammer in Draufsicht, Fig.7 eine entsprechende Seitenansicht und Fig.8 ein zugehöriges Schnittbild, Fig.9 eine schaubildliche schematische Darstellung der Anordnung von Wärmetauscher, Boiler und Laugenwanne innerhalb des Gehäuses der Maschine, Fig.10 die Tür der Geschirrspülmaschine in Seitenansicht und Fig.11 ein Schnittbild einer mit Isoliermaterial ausgefüllten Wand der Maschine.

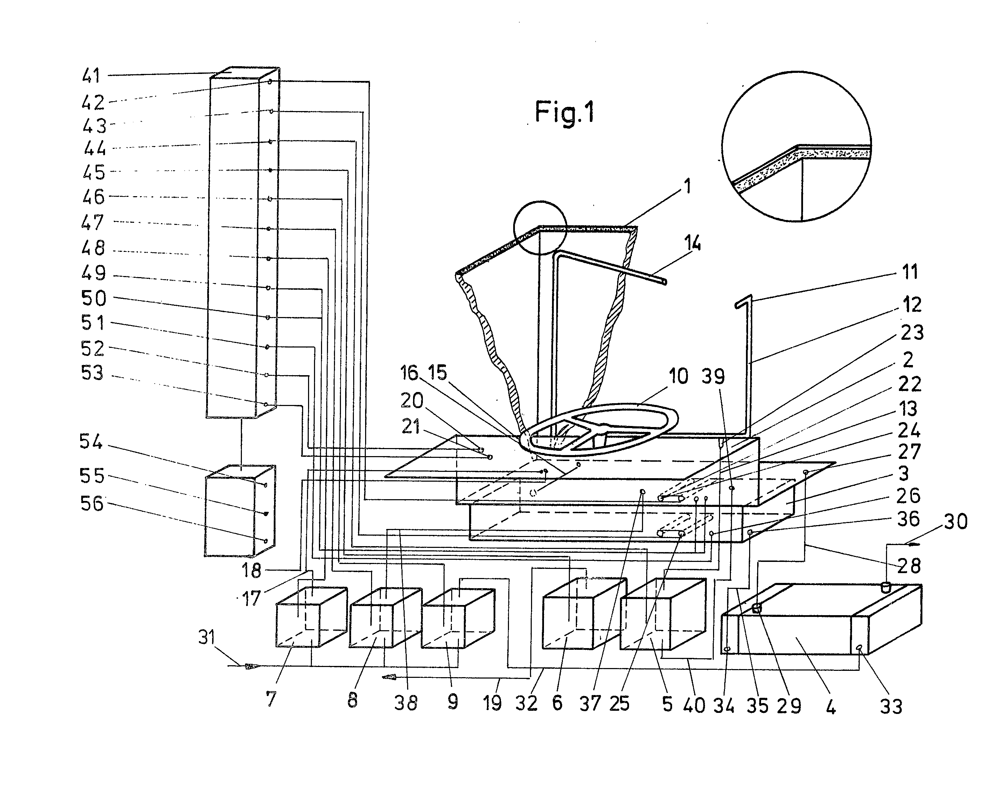

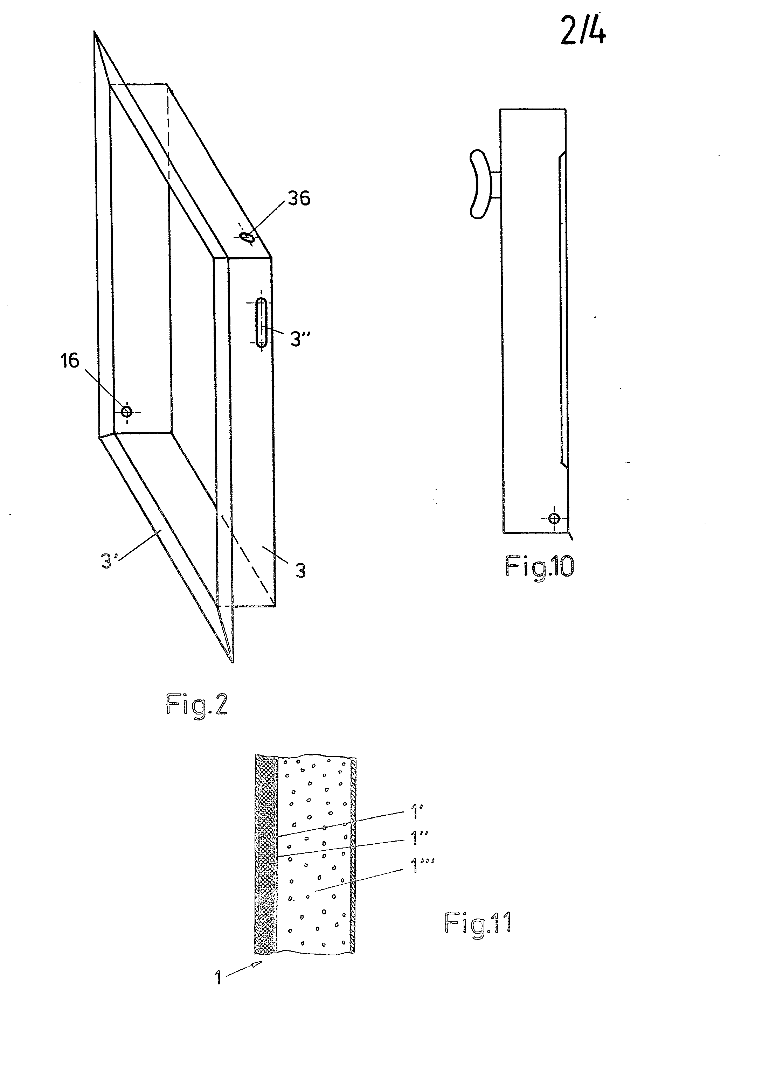

Aus der Fig.1 ist ersichtlich, daß in einem etwa viereckigen Gehäuse 1 der erfindungsgemäßen Gläser- und Geschirrspülmaschine unten die Laugenwanne 2 als gewinkeltes Blech und darunter ein etwa viereckiger, nach oben offener Boiler 3 angeordnet sind, wobei Laugenwanne 2 und Boiler 3 miteinander verschweißt sind. Unterhalb des Boilers 3 ist ein Abwasserwärmetauscher 4 angeordnet, wobei an geeigneter Stelle innerhalb des Gehäuses 1 auch eine Laugenpumpe 5, eine Dosierpumpe 6 und Elektroventile 7, 8, 9 für das Kaltschwemmen, für den Wassereinlauf und für das Heißschwemmen angeordnet sind.

Oberhalb der Laugenwanne 2 ist ein Rad 10 für einen nicht dargestellten Korb zur Aufnahme der Gläser und des Geschirrs drehbar angeordnet. Ein Waschrohr 11 ist ebenfalls oberhalb der Laugenwanne 2 vorgesehen, das mit gegen den Korb auf dem Rad 10 gerichteten Öffnungen 12 versehen ist. Über eine Leitung 13 steht das Waschrohr 11 mit der Laugenpumpe 5 in Verbindung. Ein im Gehäuse 1 ebenfalls nach oben ragendes Schwemmrohr 14 ist an seiner Unterseite an einen, an der Laugenwanne gehaltenen Wärmetauscher 15 angeschlossen, der über eine Leitung 16 an dem Boiler 3 für die Zufuhr von Heißwasser und über eine Leitung 17 an das Elektroventil 7 für das Kaltschwemmen angeschlossen ist, wobei über eine weitere Leitung 18 ein Glanzspüler allenfalls zugeführt werden kann.

Schließlich kann die Dosierpumpe 6 über eine Leitung 19 mit diesem Wärmetauscher 15 mit Mischkammer ebenfalls verbunden sein.

In der Laugenwanne 2 sind Niveaureglerelektroden 20, 21 in verschiedener Höhe vorgesehen, wobei etwas tiefer als diese Niveaureglerelektroden Temperaturfühler 22, 23 vorgesehen sind. In der Laugenwanne 2 ist ferner ein Heizstab 24 und im Boiler 3 ein weiterer Heizstab 25 angeordnet. Im Boiler 3 befindet sich überdies ein Temperaturfühler 26. Ein Abfluß 27 der Laugenwanne 2 ist über die Leitung 28 mit dem Einlaß 29 des Abwasserwärmetauschers 4 verbunden. Der eigentliche Auslaß 30 dieses Wärmetauschers 4 befindet sich in diesem an einer dem Einlaß 29 entsprechenden diametralen Stelle. Das vom Kaltwasserzufluß 31 einströmende Wasser gelangt zum Beispiel über das Elektroventil 9 für das Heißschwemmen und über die Leitung 32 zum Einlaß 33 des Wärmetauschers 4, durchströmt diesen und gelangt über den Auslaß 34 und die Leitung 35 zum Einlaß 36 des Boilers 3, wo es weiter erhitzt wird. Der Einlaß 37 der Laugenwanne 2 ist über die Leitung 38 und das Elektroventil 8 mit dem Kaltwasserzufluß 31 verbunden.

In der Laugenwanne 2 befindet sich schließlich auch ein Anschluß 39 für eine Leitung 40, die zur Laugenpumpe 5 führt. Sowohl die Elektroventile 7, 8, 9 als auch die Laugenpumpe 5 und die Dosierpumpe 6 sind über Leitungen mit einer nur schematisch angedeuteten Elektroniksteuerung 41 in Schaltverbindung, wobei der Anschluß 42 am Ausgang des Laugenheizkörpers 24 und der Anschluß 43 am Ausgang der Boilerheizung 25 liegen.

Der Anschluß 44 ist verbunden mit der Laugenpumpe 5, wobei der Anschluß 45 eine Verbindung mit der Dosierpumpe 6 herstellt. Der Anschluß 46 der Elektroniksteuerung 41 liegt an dem Elektroventil 9 für das Heißschwemmen, wogegen der Anschluß 47 mit dem Elektroventil 8 für den Wassereinlauf in Verbindung steht. Der Anschluß 48 liegt schließlich am Elektroventil 7 für das Kaltschwemmen. Die weiteren Anschlüsse 49 und 50 liegen gemeinsam an den Temperaturfühlern 22, 23 in der Laugenwanne 2. Der Anschluß 51 ist für den Temperaturfühler 26 des Boilers 3 bestimmt.

- 8 -

Schließlich liegt der Anschluß 52 an der oberen Niveaureglerelektrode 20 und der Anschluß 53 an der unteren Niveaureglerelektrode 21 der Laugenwanne 2. Die weiteren Anschlüsse 54, 55, 56 dieser Elektroniksteuerung 41 können für bestimmte Sonderwünsche reserviert sein.

Gemäß Fig.2 weist der kastenförmige Boiler 3 an seiner offenen Seite einen Flansch 3' auf, mit welchem er an der Unterseite der Laugenwanne 2 (Fig.1) direkt angeschweißt sein kann. Bei 36 befindet sich der Wassereinlaß und bei 16 der Auslaß für das heiße Wasser. Ein länglicher Schlitz 3" ist für das Einsetzen des Heizstabes 25 aus Fig. 1 vorgesehen.

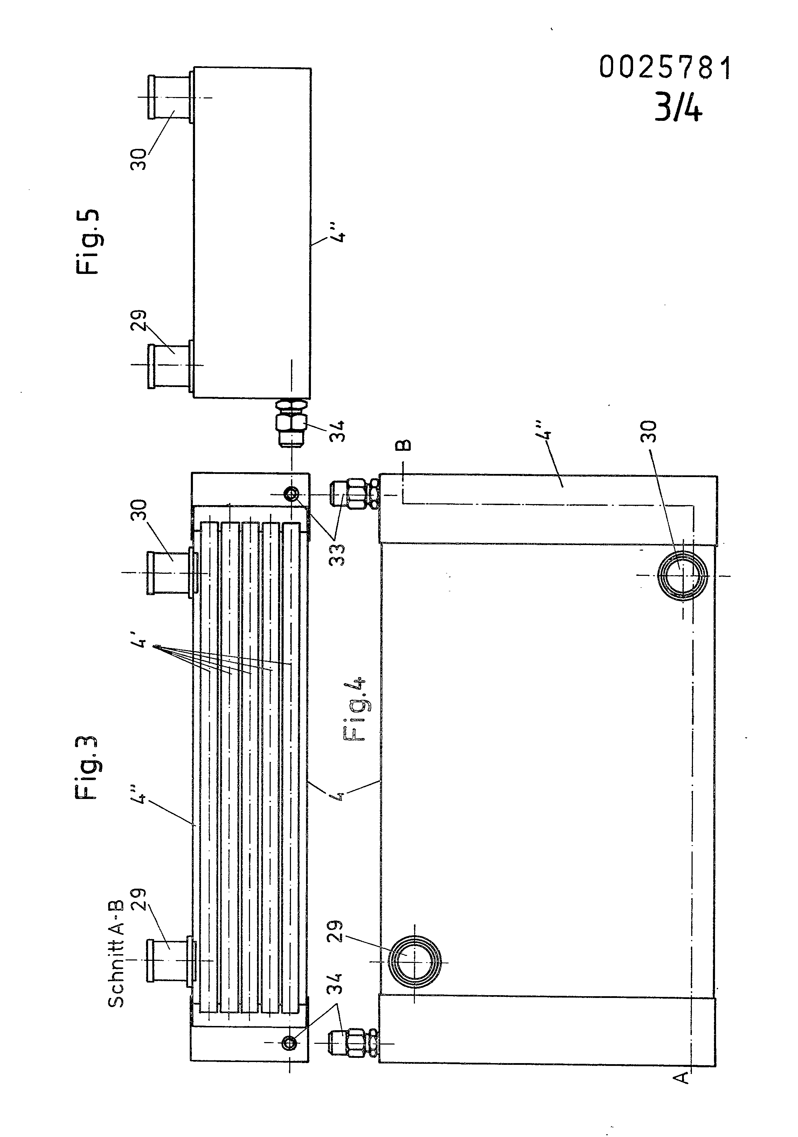

Aus den Fig.3 bis 5 ist zu ersehen, daß der in Fig.1 gezeigte Abwasserwärmetauscher 4 aus im Abstand voneinander gehaltenen Kupferröhren 4' und einem Gehäuse 4" besteht, das diese umgibt und einen Einlaß 29 für das warme Abwasser und einen Auslaß 30 besitzt, wobei Ein- und Auslaß 29, 30 gegenüber den Kupferröhren 4' diametralliegend angeordnet sind. Dabei ist der Einlaß 29 für das Abwasser näher dem Auslaß 34 für das Frischwasser als der Auslaß 30 für das Abwasser dem Einlaß 33 für das Frischwasser.

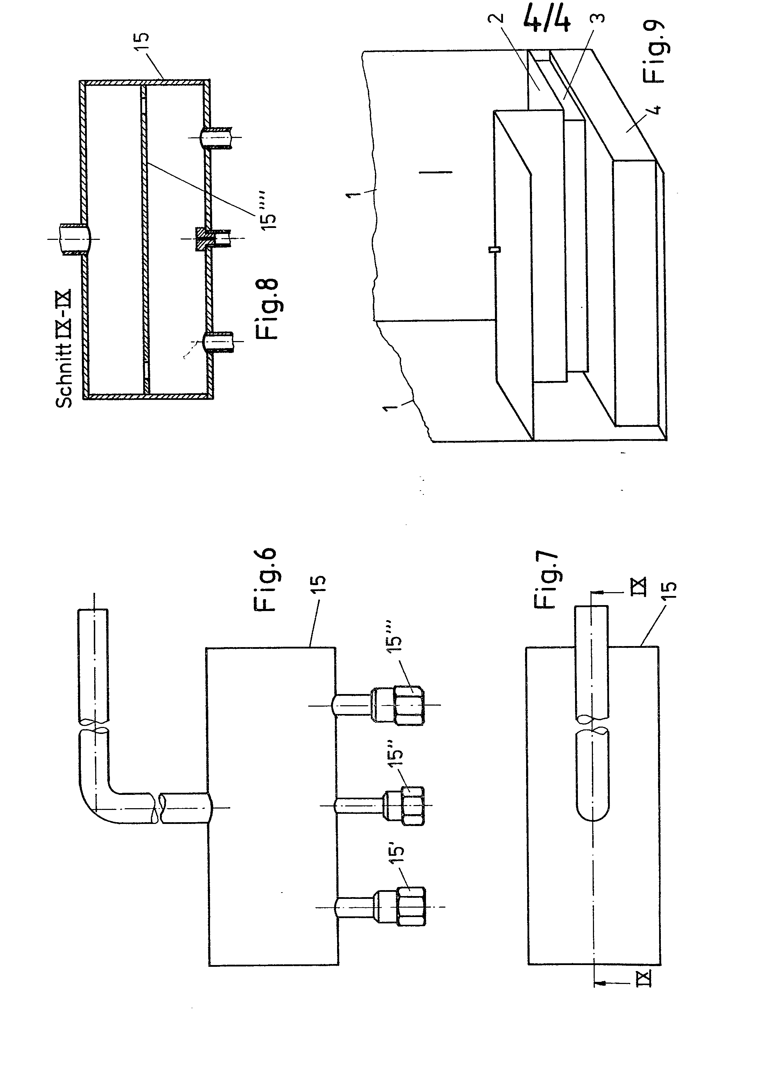

Den Fig.6 bis 8 ist zu entnehmen, daß der in Fig.1 gezeigte Wärmetauscher 15 aus einem Gehäuse mit drei Anschlüssen 15', 15" und 15"' auf der einen Seite für Heiß- und Kaltwasser sowie für den Glanzspüler (in der Mitte) und einem Anschluß auf

- 9 -

der anderen Seite für das Schwemmrohr 14 besteht, wobei zwischen diesen Anschlüssen eine Trennwand 15"" mit Löchern vorgesehen ist, durch die eine Mischkammer gebildet ist.

Die Fig.9 veranschaulicht, daß zwischen den Innenwänden (nur zwei dargestellt) des Gehäuses 1 und dem Boiler 3, der auf dem Abwasserwärmetauscher 4 aufsitzt und mit seiner offenen Oberseite an dem Blech der Laugenwanne 2 angeschweißt ist, allseitig ein Abstand eingehalten ist, der mit Isoliermaterial, z.B. PU-Hartschaum ausgefüllt sein kann.

Aber auch alle Wände des Gehäuses 1, wie Fig.11 zeigt, der Boden, die Decke und die in Fig.10 dargestellte Tür sind vorteilhaft doppelwandig ausgeführt und mit Isoliermaterial, z.B. PU-Weichschaum 1', einer Alufolie 1" und PU-Hartschaum 1"' ausgefüllt.

Patentansprüche:

1. Gläser- und Geschirrspülmaschine mit einem Gehäuse, in welchem ein drehbarer, Gläser und Geschirr aufnehmender Korb über einer Laugenwanne angeordnet ist, mit einem mit gegen den Korb gerichteten Öffnungen versehenen Waschrohr und einem entsprechenden Schwemmrohr, mit einem Boiler zum Erhitzen des Wasch- und Schwemmwassers, mit Elektroventilen für das Kalt- und Warmschwemmen sowie für den Wasserzulauf, mit einer Dosierpumpe für den Glanzspüler, mit einer Laugenpumpe und einem Abwasserabfluß, wobei in einem vom heißen Abwasser durchströmten Wärmetauscher das zugeführte Kaltwasser erwärmt wird, dadurch gekennzeichnet, daß außer dem Abwasserwärmetauscher (4) ein weiterer Wärmetauscher (15) mit Mischkammer für das Schwemmrohr (14) an den Boiler (3) und an die Dosierpumpe (6) für das Glanzspülmittel angeschlossen ist, daß alle Wände, der Boden, die Decke und die Tür des Gehäuses (1) doppelwandig ausgeführt und mit Isoliermaterial (1', 1", 1"') ausgefüllt sind, daß der Abwasserwärmetauscher (4), der Boiler (3) und die Laugenwanne (2) übereinander angeordnet sind, daß der Laugenwannenboden auf dem nach oben offenen Boiler (3) aufsitzt und an diesem, z.B. durch Schweißen befestigt ist und daß zwischen Gehäusewänden und den senkrechten Wänden von Laugenwanne (2), Boiler (3) und Abwasserwärmetauscher (4) zur Aufnahme von Isoliermaterial (1', 1", 1"') ein Abstand vorhanden ist.

2. Gläser- und Geschirrspülmaschine nach Anspruch 1, dadurch gekennzeichnet, daß der Wärmetauscher (15) mit Mischkammer aus einem Gehäuse mit drei Anschlüssen (15', 15", 15"') auf der einen Seite für Heiß- und Kaltwasser sowie für den Glanzspüler und einen Anschluß auf der anderen Seite für das Schwemmrohr (14) aufweist und daß zwischen diesen vier Anschlüssen eine Trennwand (15"") mit Löchern vorgesehen ist, welche Wand die Mischkammer bildet (Fig.6 bis 8).

3. Gläser- und Geschirrspülmaschine nach einem der Ansprüche 1 oder 2, dadurch gekennzeichnet, daß der Abwasserwärmetauscher (4) aus im Abstand voneinander gehaltenen Kupferröhren (4') und einem diese umgebenden Gehäuse (4") mit Ein- und Auslass (29, 30) besteht, wobei Ein- und Auslaß (29, 30) für das Abwasser an den Kupferröhren (4") diametral gegenüberliegend angeordnet sind und der Einlaß (29) für das Abwasser näher dem Auslaß (34) für das Frischwasser als der Auslaß (30) für das Abwasser dem Einlaß (33) für das Frischwasser ist (Fig.3, 4).

4. Gläser- und Geschirrspülmaschine nach Anspruch 2, dadurch gekennzeichnet, daß der Kaltwasseranschluß (15"') mit dem Kaltschwemmventil (7) und der Heißwasseranschluß (15') mit dem Abwasserwärmetauscher (4) über den Boiler (3, 16, 36, 35, 34) in Verbindung stehen, wobei an den Anschluß (15") für den Glanzspüler die Dosierpumpe (6) angeschlossen ist (Fig. 1, 6).

Fig.1

41
42
43
44
45
46
47
48
49
50
51
52
53

54
55
56

18
17

31

7   8   38   9   19   32   6   37   25   5   40   34   35   29   4   33

1
14

11
12
23
2
22
13
24
27
3
26
36   30
28

16  15
20
21

10   39

0025781

1/4

0025781

2/4

36

16

3"

3'

3

Fig.2

Fig.10

1'
1"
1'''

1

Fig.11

# Fig.3

Schnitt A-B

29  4"  4'  30

34  29  4  33  34

# Fig.4

B

4"

A  30

# Fig.5

29  30

34

4"

002578 1
3/4

0025781

4/4

Fig.6

Fig.7

Fig.8

Fig.9

Schnitt IX-IX

15
15''''

15'
15''
15'''

1
2
3
4

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>FR - A - 806 527</u> (HOBART) | 1,3 |
| | * Seite 3, Zeilen 90-105; Seite 4, Zeilen 1-51; Figuren 9-11 * | |
| | -- | |
| | <u>FR - A - 1 074 951</u> (BRAITHWAITE & <br>SON) | 1 |
| | * Seite 3, linke Spalte, vor-letzter Abschnitt; Figur 3 * | |
| | -- | |
| | <u>FR - A - 1 175 448</u> (WEFCOMA) | 1 |
| | * Seite 2, linke Spalte * | |
| | -- | |
| | <u>FR - A - 1 171 345</u> (BOSCH) | 1,3 |
| | * Insgesamt * | |
| | -- | |
| | <u>US - A - 1 537 842</u> (McCARTY et al.) | 1 |
| | * Insgesamt * | |
| | -- | |
| | <u>DE - A - 2 400 935</u> (AMSTUTZ) | 1 |
| | * Seite 3, Abschnitt 1 * | |
| | ---- | |

**KLASSIFIKATION DER ANMELDUNG (Int. Cl.³)**

A 47 L 15/42

**RECHERCHIERTE SACHGEBIETE (Int. Cl.³)**

A 47 L
D 06 F

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-12-1980 | SCHARTZ |

EPA form 1503.1 06.78